# EUROPEAN PATENT SPECIFICATION

(11) **EP 2 592 948 B1**
(45) Date of publication and mention of the grant of the patent: **29.04.2020**
(21) Application number: 11748598.7
(22) Date of filing: 15.07.2011
(51) Int. Cl.: A23K 20/158, A23K 20/163, A23K 20/147

(54) **FOOD PRODUCT**
NAHRUNGSMITTEL
PRODUIT ALIMENTAIRE

(30) Priority: 16.07.2010 GB 201011988
(43) Date of publication of application: 22.05.2013
(73) Proprietor: Mars, Incorporated, McLean, VA 22101 (US)
(72) Inventor: HEWSON-HUGHES, Adrian, Melton Mowbray Leicestershire LE14 4RT (GB); LEAVESLEY, Craig, Melton Mowbray Leicestershire LE14 4RT (GB); SIMPSON, Stephen James, NSW 2076 (AU); RAUBENHEIMER, David, Auckland 0622 (NZ)
(74) Representative: Nony
(86) International application number: PCT/EP2011/062123
(87) International publication number: WO 2012/007568

(56) References cited:
- WO-A1-03/061705
- US-A1- 2006 204 637
- US-B1- 6 204 291

## Description

The present invention relates to a nutritionally complete pet food product comprising at least two compositions for use in a method of reducing calorie intake in a companion animal, wherein the compositions differ in their level of fat, protein or carbohydrate on an energy ratio basis by 6% to 50% and wherein the compositions are consumed on consecutive days, each composition being consumed on a different day. The invention also relates to such a food product in the prevention of weight gain after surgical procedures to neuter a companion animal, and also to the food product in a weight loss regime. It also relates to a method of reducing calorie intake in a companion animal, comprising feeding the companion animal the pet food product of the invention.

Establishing the nutritional priorities that govern foraging behaviour, diet selection and postingestive processing is fundamental to predicting an animal's interactions within its nutritional environment, with consequences that extend from the health and evolutionary fitness of the individual to the structuring of populations and communities. Conventional models have assumed that animals typically prioritize a single food component, usually energy, nitrogen or toxins. However, experimental studies on herbivores and omnivores across a wide range of taxa have shown that animal nutrition can better be understood in terms of balancing multiple nutritional and non-nutritional components of foods. This is predictable in theory since such animals experience a range of food types and qualities, in which nutritional components need not be tightly correlated, necessitating separate regulation of key nutrient dimensions. In contrast, the prevailing view until recently was that predators have no need to regulate intake of multiple nutrients, but are mainly limited by food availability. This assumption is founded on the premise that predators feed on relatively rare, high-quality foods that are less variable in composition than the foods of herbivores and omnivores. In recent years, however, this view of predator nutritional ecology has been called into question.

Establishing whether predators can regulate their intake of multiple nutrients is a fundamental issue for nutritional ecology, but it is especially important to understand the regulatory capacities of domestic pets such as cats, since the diet of the animal is largely determined by the carer, Providing inappropriate diet compositions has implications for animal health and welfare, and potentially also for urban ecology through pets supplementing their diet from nature. There are additional implications for understanding the evolution of nutritional biology under artificial selection.

The number of overweight companion animals has become a greater problem in recent years. Being overweight, as in humans, has serious implications for the health of animals and also places a greater burden on veterinary services. Disorders related to an animal being overweight includes diabetes, joint problems and other direct and indirect discomforts for an animal. Many pet owners unintentionally overfeed their animals and many animals will overeat since their instinct is to eat as much as possible when food is available in preparation for times of starvation. However, as domestic animals, those times of starvation do not occur, often causing the animal to gain weight.

Additionally, it is known that after neutering, cats often have increased appetite and a reduced metabolic rate, which also contribute to weight gain.

Results from earlier studies of dietary selection in the domestic cat, *Felis catus,* have been ambiguous. A lack of regulation of protein intake in cats offered pairwise combinations of foods differing in protein content has been claimed. On the other hand, cats were reported to distinguish between foods based on the concentration of methionine. It has also been concluded that cats are unlikely to show nutrient-specific food selection, but instead to use general mechanisms, such as neophilia and neophobia, to avoid nutritional imbalances. WO 03/061705 describes a diet system for promoting comprehensive weight management in companion animals. The diet system includes a stage I pet food product for promoting weight loss and building lean body mass and a stage II pet food product for maintaining the weight loss and the lean body mass.

The inventors have found that through an extensive series of dietary studies on the domestic cat, based upon geometric multivariate analysis of the interactions between protein, fat and carbohydrate, animals show strong nutritional regulation. This reinforces the fact that macronutrient regulation is common across trophic levels and provides important information for the design of domestic cat nutritional regimens.

When a companion animal has simultaneous access to two or three diets with different levels of protein, fat or carbohydrate the animal will adjust/regulate its intake of each diet resulting in a particular ratio of energy intake from each macro nutrient. The present invention is useful in preventing a companion animal from overeating since the inventors have surprisingly discovered that a companion animal will consume fewer calories, i.e. reduce its calorie intake, whilst still maintaining the same ratio of energy intake from protein, fat and carbohydrate when the diets are fed on two or three alternate days rather than simultaneously.

Accordingly, a first aspect of the present invention provides a nutritionally complete pet food product comprising at least two compositions for a companion animal, wherein the compositions differ in their level of fat, protein or carbohydrate on an energy ratio basis by 6% to 50%, and where the compositions are consumed on consecutive days, each composition being consumed on a different day. A second aspect of the invention relates to the food product of the first aspect for use in reducing calorie intake in a companion animal.

The pet food product may comprise two compositions, which are consumed on alternate days. Alternatively, the pet food product may comprise three compositions wherein each of the compositions are provided to the companion animal on three consecutive days, and each composition is fed to the companion animal on a different day.

The compositions may very in their level of fat, protein or carbohydrate on an energy ratio basis by 10% to 40%, or more preferably, by 20% to 30%. The compositions may be fat-enriched, protein-enriched, or carbohydrate-enriched.

The inventors have discovered that the food product of the invention provides an advantage in that the companion animal is able to vary its consumption of each of the compositions over the 2 or 3 days (hence providing variety to the animal) and is still able to maintain the same macronutrient intake energy ratio that it would select if provided with all the diets simultaneously. However, by providing, for example, a protein-enriched composition on alternate days to a fat-enriched composition, the animal consumes fewer calories than if both the protein-enriched and fat-enriched compositions are provided simultaneously. Likewise, for a food product that comprises three compositions, a protein-enriched composition being fed on a different day to a fat-enriched composition, which are also fed on a different day to a carbohydrate-enriched composition, fewer calories are consumed than if the three compositions are provided simultaneously. The compositions are fed on consecutive days, with the cycle being repeated as often as desired, or necessary. For example, for a two-composition food product, the protein-enriched composition may be fed on days 1, 3, 5, 7, 9, 11, 13, 15, 17 etc; and the fat-enriched composition fed on days 2, 4, 6, 8, 10, 12, 14, 16, 18 etc. If three compositions are included, the protein-enriched compositions may be fed on days 1, 4, 7, 10, 13, 16, 19 etc; the fat-enriched composition on days 2, 5, 8, 11, 14, 17, 20 etc; and the carbohydrate-enriched compositions on days 3, 6, 9, 12, 15, 18, 21 etc. Of course, any of the two or three compositions may be the first one of the cycle; the order in which the compositions are fed is not critial to the invention.

The pet food product of the first aspect may be fed to a companion animal for a limited period of time, or in the case of a particularly sedentary animal, may be used as a permanent diet. The food product may be fed to an animal for up to six months, or for 8 to 20 weeks. The inventors have unexpectedly found that companion animals reduce their calorie intake when consuming the food products of the present invention. Over a period of time this is most likely to lead to weight loss, However, for a companion animal that is not active, for example an older animal or a house animal, such diet may be used as a permanent diet. The food product of the present invention may also be used in preventing weight gain after a surgical procedure for neutering a companion animal.

The pet food of the present invention preferably comprises three compositions which differ in their level of fat, protein and/or carbohydrate. Where the food product of the present invention comprises two compositions, these may differ in their level of two or more of fat, protein and/or carbohydrate.

The inventors have found that although consuming different levels of protein and fat, or protein, fat and carbohydrate on each of the consecutive days, a companion animal is able to achieve its optimum macronutrient ratio of fat, protein and/or carbohydrate once the two (in the case of a food product comprising two compositions) or three (in the case of a food product comprising three compositions) days has been completed if the compositions allow.

Preferably, the pet food product of the invention allows an animal to achieve its optimum macronutrient ratio. To achieve this the individual compositions must be formulated to allow such ratios to be obtained, by way of the protein:fat:carbohydrate energy ratio.

The pet food product is nutritionally complete and therefore contains all the necessary micronutrients as well the macronutrients. All micronutrients are contained at the recommended concentrations for a companion animal. Preferably the fat level in composition 1 is between 20% and 65% on an energy ratio basis, the protein level is between 35 and 75% on an energy ratio basis and the carbohydrate level is between 1% and 35% on an energy ratio basis and the energy ratio provided by fat, protein or carbohydrate differs from composition 1 by at least 6%. Preferably the fat enriched composition comprises 40% to 75% fat on an energy ratio basis, more preferably from 45% to 55% fat on an energy ratio basis. The protein-enriched composition may comprise from 50% to 75% protein on an energy ratio basis, more preferably from 60% to 70% protein on an energy ration basis. A carbohydrate enriched composition preferably comprises from 25% to 40% carbohydrate on an energy ratio basis, more preferably from 30% to 35% carbohydrate on an energy ratio basis.

The compositions encompass any product that an animal consumes in its diet. Thus, the compositions may include the standard food products as well as food products for companion animals, such as food snacks (for example snack bars, cereal bars, snacks, treats, biscuits and sweet products), The composition may be a cooked product. It may incorporate meat or animal-derived material (such as beef, chicken, turkey, lamb, fish, blood plasma, marrowbone, etc or one or more thereof). Alternatively the composition may be meat-free (preferably including a meat substitute such as soya, maize gluten or a soya product) in order to provide protein. The composition may contain additional protein sources such as soya protein concentrate, milk, protein, gluten, etc. The composition may also contain starch, such as one or more grains (e.g. wheat, corn, rice, oats, barley, etc) or may be starch-free. The composition may incorporate or be a gelatinised starch matrix. The composition may incorporate one or more types of fibre such as sugar beet pulp, chicory pulp, chicory, coconut endosperm fibre, wheat fibre etc. Dairy products, such as those incorporating a cream or a cheese sauce, may be suitable. The composition can also be newly designed products currently not available. The most suitable composition may be a pet food product as described herein which is sold as a pet food, in particular a pet food for a domestic dog or a domestic cat. The food products are preferably packaged. In this way the consumer is able to identify, from the packaging, the ingredients of the product and confirm that it is suitable for the particular animal in question. The packaging may be metal (usually in the form of a tin or flexifoil), plastic (usually in the form of a pouch or bottle), paper or card. The amount of moisture in any product may influence the type of packaging, which can be used or is required. The foodstuff may be available as a "kit" or "pack" wherein the different food product are individually packaged and these packages are somehow joined together, for example in a box and/or with overarching packaging for the two or more packages of food product. Such a "kit" may comprise a "weekly" number of meals for an animal. By weekly it is meant enough of each of the food product compositions to feed an animal for seven days, in a convenient pre-packaged kit.

The two or more food compositions or the food product are not mixed. They may be provided on or in different containers, such as a bowl, plate, packaging. The containers may or may not be sealed. Each of the two or more food compositions of the food product are provided on separate consecutive days to a companion animal.

The compositions themselves may be a nutritionally complete food product in their own right. Each may be semi-moist or a moist (wet) product. Wet food includes food that is usually sold in a container, such as a tin, pouch or tray and has a moisture content of 70% to 90%. Semi-moist food includes food having a moisture content of from above 15% up to 70%. The amount of moisture in any product may influence the type of packaging that can be used or is required. The compositions, of any moisture level, may be ready-to-eat.

The compositions in the first or second aspects of the invention may be nutritionally complete either alone or in combination and as such, the practice of the invention provides a suitable nutritionally complete diet for the animal.

The pet food product of the invention may be fed to a companion animal as its normal diet on a permanent basis. Alternatively, it may be used as a relatively short term diet in order to reduce the animal's calorie intake due to weight gain, or post neutering surgery. The pet food product may be used in a weight loss regime for an overweight animal. When used in a weight loss regime, the food product may be fed to a companion animal for as long as it takes for the animal to reach its target weight. The animal may then return to its usual diet or may continue with the food product of the present invention in the case that the caloric intake is sufficient to support its usual daily calorie expenditure. By weight loss regime it is meant a period of time wherein the feline companion animal is fed the food product of the invention in order to reduce its calorie intake with the aim of reducing its weight from an overweight level to a normal level. By normal level it is meant a weight that is suitable and recommended for that animal.

The pet food product may be used with any companion animal, for example a dog, a cat, a horse, a guinea pig, or a rabbit. Preferably, the companion animal is a domestic feline animal (*Felis catus*).

The pet food product of the invention may be used in conjunction with one or more additional calorie intake reduction such as bulking agents or appetite reducers. Such agents may include non-digestible fibres, ash or the like.

A third aspect of the present invention includes a method of reducing calorie intake in a companion animal. The method comprising feeding to the companion animal at least two different compositions on consecutive days, wherein each composition is consumed on a different day and wherein the compositions differ in their fat, protein or carbohydrate content on an energy ratio basis by 6% to 50%. The method may comprise feeding to the animal a food product comprising two compositions which are consumed on alternate days, or a food product comprising three compositions where the compositions are consumed on three consecutive days and on the fourth day the first composition is fed again. The method may also comprise feeding the pet food product to the companion animal for six months, or for 8 to 20 weeks, and the method may be used in preventing weight gain after a surgical procedure for neutering a companion animal. Alternatively the method may be used in a weight loss regime. The compositions may be as defined for the first and second aspects.

All features of the first and second aspects apply to the third aspect, *mutatis mutandis.*

The invention will now be described with reference to the following Figures and Examples, wherein:

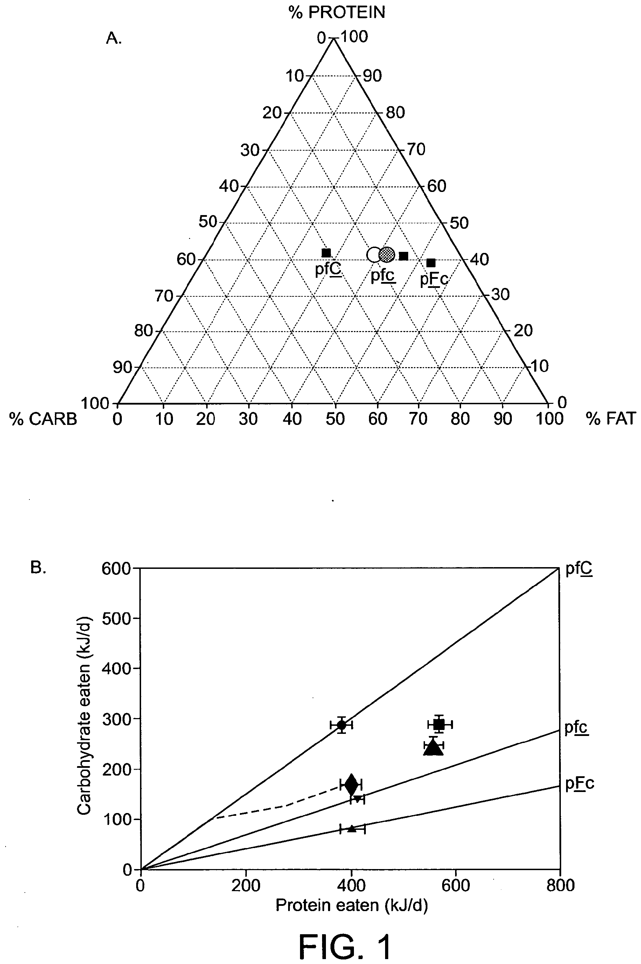

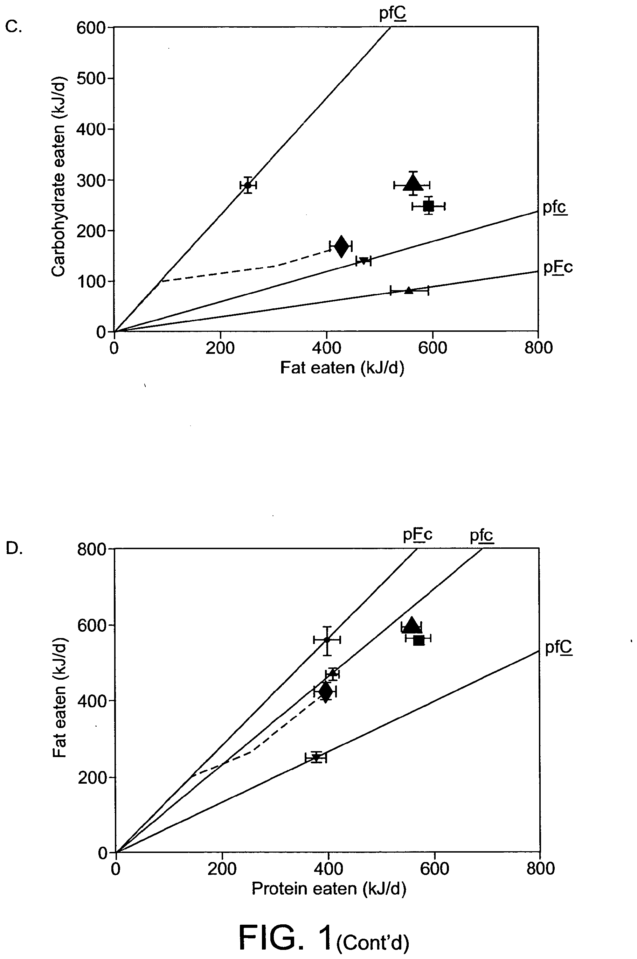

Figure 1 shows the results from Study 1, wet diets with fixed protein. The square shows the mean diet composition (A) and nutrient intakes (B - D) of naive simultaneous self-selecting cats (Phase 1), while the triangle shows the same results for experienced self-selection (Phase 3). Mean diet composition and intakes for sequential self-selection (Phase 2) are shown as a diamond. The solid lines in B - D represent the two-dimensional nutrient balance of the experimental foods, and hence the trajectory to which the cats were confined when eating the respective foods (i.e. nutrient rails). The small dots on these rails show the average daily intakes of cats confined to the respective foods during the sequential self-selecting stage of the experiment (Phase 2). The intake of each diet was averaged for individual cats across all eight cycles of the phase, and the means of these averages are plotted in the figure. Therefore, each cat is represented only once for a given diet, and each appears in the means for all three diets. The dashed line shows the intake trajectory compounded over all eight 3-day cycles and all experimental replicates in the sequential self-selection phase (Phase 2) of the experiment. The aim of including this is to show the average relative step size and the contribution it makes to the overall nutrient intake by sequential self-selecting cats (diamond). By convention we have represented the food with the steepest, shallowest and intermediate nutrient rails, respectively, as the sequence of intakes, but in reality the sequence differed among cats. Means and SE are plotted in B - D, with n= 12 cats per point;
Figure 2 shows the results from Study 2, wet diets with fixed fat. Details are as in Figs 1, with n = 12 cats per point;
Figure 3 shows the results from Study 3, wet diets with fixed carbohydrate. Details are as in Figs 1, with n = 11 cats per point;
Figure 4 shows the mean % bodyweight change in study 1. Dashed vertical lines separate phase 1 (naïve simultaneous self-selection, days 1-7), phase 2 (monadic sequential self-selection, days 8-31) and phase 3 (experienced simultaneous self-selection, days 32-38);
Figure 5 shows the mean % bodyweight change in study 2. Dashed vertical lines separate phase 1 (naive simultaneous self-selection, days 1-7), phase 2 (monadic sequential self-selection, days 8-31) and phase 3 (experienced simultaneous self-selection, days 32-38);
Figure 6 shows the mean % bodyweight change in study 3. Dashed vertical lines separate phase 1 (naive simultaneous self-selection, days 1-7), phase 2 (monadic sequential self-selection, days 8-31) and phase 3 (experienced simultaneous self-selection, days 32-38);
Figure 7 shows the mean % bodyweight change in study 4. Dashed vertical lines separate phase 1 (naïve simultaneous self-selection, days 1-7), phase 2 (monadic sequential self-selection, days 8-31) and phase 3 (experienced simultaneous self-selection, days 32-38);

### Example 1: Selection studies with three diet choices

### Experimental animals, diet compositions and general protocols

Adult, neutered domestic short hair cats (*Felis catus*) of both sexes bred and housed at the WALTHAM® Centre for Pet Nutrition, Melton Mowbray, UK participated in the these studies. Throughout each study, the cats were housed individually in purpose-built, behaviorally-enriched lodges (w x d x h: 1.1m x 2.5m x 2.1m) and were socialized as a group for approximately 1 h each day and had access to drinking water at all times. The studies were approved by the WALTHAM® Centre for Pet Nutrition Ethical Review Committee.

Six wet-format diets were manufactured using standard processing (canning) conditions at Mars Petcare, France, These diets were formulated based on Mars Inc. commercial recipes with the inclusion level of chicken breast, soya protein isolate, lard and wheat flour altered to achieve differences in the macronutrient energy ratios of the diets (Table 1).

Detailed experimental designs are given below but in general each bowl contained 190 g of the allocated diet from 10:30 h to 15:00 h and was replaced with a fresh aliquot (190 g) from 15:00 h to 08:30 h the next day. Any uneaten food was weighed as food was collected at 15:00 h and 08:30 h.

The experiments had three phases. Phase 1 (naïve cats, simultaneous self-selection): For seven days cats were given three foods simultaneously in three separate bowls from which to self-select a diet. To avoid positional bias, the position of each diet was rotated daily. Phase 2 (monadic diets, sequential self-selection): cats were cycled through eight, three-day periods in which they were confined to a different food on each of the three days. To reduce sequence effects, cats were randomly assigned to one of six orders of diet presentation. They were therefore unable to self-select a diet within each day, but could regulate their intake on successive days so as to compensate for imbalances accrued over previous days. This was, therefore, a sequential self-selection design in which the switching interval was experimentally regulated at one day. Phase 2 also served as a conditioning phase in which the cats gained experience of each of the foods separately, Phase 3 (experienced simultaneous self-selection): In this phase the regime of Phase 1 was repeated (simultaneous self-selection), on the now "experienced" cats.

### Study 1. Fixed protein

Twelve neutered adult cats (7 female, 5 male) aged 4.5 - 11.1 years (mean ± SEM: 6.8 ± 0.7 y) and weighing 4.98 ± 0.34 kg were used, Diet compositions are given in Table 1.

### Study 2. Fixed fat

Twelve neutered adult cats (7 female, 5 male) aged 4.5 - 11.1 years (mean ± SEM: 6.6 ± 0,7 y) and weighing 5.02 ± 0.17 kg participated in this experiment. Diet compositions are given in Table 1.

### Study 3. Fixed carbohydrate

Twelve neutered adult cats (4 female, 8 male) were allocated to this study although one male was removed due to low food intake and loss of bodyweight and the data were excluded from analysis, Cats (n=11) were aged 3.6 to 12.7 years (mean ± SEM: 6.6 ± 0.9 y) and weighed 5.14 ± 0.27 kg at the start of the study. Diet compositions are given in Table 1,

### Study 4, Variable protein, carbohydrate and fat

Twelve neutered adult cats (6 female, 6 male) aged 3.3 - 8.1 years (mean ± SEM: 6.2 ± 0.5 y) and weighing 4.93 ± 0.34 kg were used. Diet compositions are given in Table 1.

**Table 1. Macronutrient compositions of the diets used in studies 1 - 4.**

| Study | Diet | Predicted metabolizable energy¹ (MJ/kg) | PER % | FER % | CER % |
|---|---|---|---|---|---|
| 1 | pfC² | 3.07 | 41 | 27 | 31 |
| | pFc | 3.88 | 39 | 54 | 8 |
| | pfc | 3.32 | 40 | 46 | 14 |
| 2 | pfC | 3.07 | 41 | 27 | 31 |
| | Pfc | 3.19 | 68 | 30 | 3 |
| | pfc | 3.08 | 53 | 32 | 15 |
| 3 | Pfc | 3.19 | 68 | 30 | 3 |
| | pFc | 3.88 | 39 | 54 | 8 |
| | pfc | 3.36 | 53 | 44 | 3 |
| 4 | pfC² | 2.88 | 45 | 24 | 31 |
| | Pfc | 2.76 | 71 | 26 | 3 |
| | pFc | 3.76 | 36 | 55 | 9 |

| | | | | | |
|---|---|---|---|---|---|
| ¹Proximate analysis and modified Atwater factors (protein 16.32 kJ/g, fat 32.22 kJ/g, digestible CHO 12.55 kcal/g) were used to calculate the predicted metabolizable energy of each diet. ²Where diets with the same letter descriptors have different energy content and macronutrient profiles this is due to analytical differences between batches of diet made to the same recipe. | | | | | |

### Results

### Food and Energy Intake

### Study 1

The nutrient intake plots (Fig 1B - D) show that the experienced simultaneous self-selectors and the sequential self-selectors compiled a diet with very similar macronutrient balance and that both simultaneous self-selection groups ingested appreciably more nutrients overall than did the sequential self-selection group. This is also clear from Table 2 where it can be seen that total daily food intake in the naive and experienced simultaneous self-selection phases were greater than the intake during the monadic phase (Table 2). These data together suggest that an enforced diet switching interval of one day results in reduced nutrient (and hence calorie) intake (Table 3), but has no impact on the balance of nutrients selected compared with experienced simultaneous self-selectors (i.e. the triangle and the diamond lie along the same imaginary nutritional rail (in Fig 1B - D) indicating the same proportions of macronutrients eaten but the diamond lies lower down the rail indicating lower amounts of energy consumed from each macronutrient).

**Table 2. Mean daily intake (g) of each diet for each phase of study 1**

| Phase 1 Naïve self-selection (3 diets offered) | Phase 2 Learning/Monadic (one diet offered) | Phase 3 Experienced self-selection (3 diets offered) | |
|---|---|---|---|
| pfC | 217.9 | 299.0 | 150.2 |
| Pfc | 111.6 | 266.2 | 122.2 |
| pfc | 95.4 | 306.1 | 138.2 |
| Total (g/day) | 424.9 | - | 410.6 |

**Table 3. Mean daily intake (g) of macronutrient for each phase of study 1**

| | Phase 1 Naïve self-selection | Phase 2 LearninglMonadic | | | Phase 3 Experienced self-selection |
|---|---|---|---|---|---|
| | | pfC | pFc | pfc | |
| Protein (g/day) | 35.1 | 23,3 | 24.5 | 25,2 | 34.3 |
| Fat (g/day) | 17.4 | 7.7 | 17.2 | 14.5 | 18.3 |
| CHO (g/day) | 22.8 | 23.0 | 6.3 | 11.1 | 19,4 |
| Total Energy (kcal/day) | 339.3 | 219.2 | 246.9 | 243.2 | 332.9 |
| Total Energy (kcal/kg bwt) | 69.9 | 45.1 | 51.5 | 50.3 | 69.3 |

### Study 2. Fixed fat

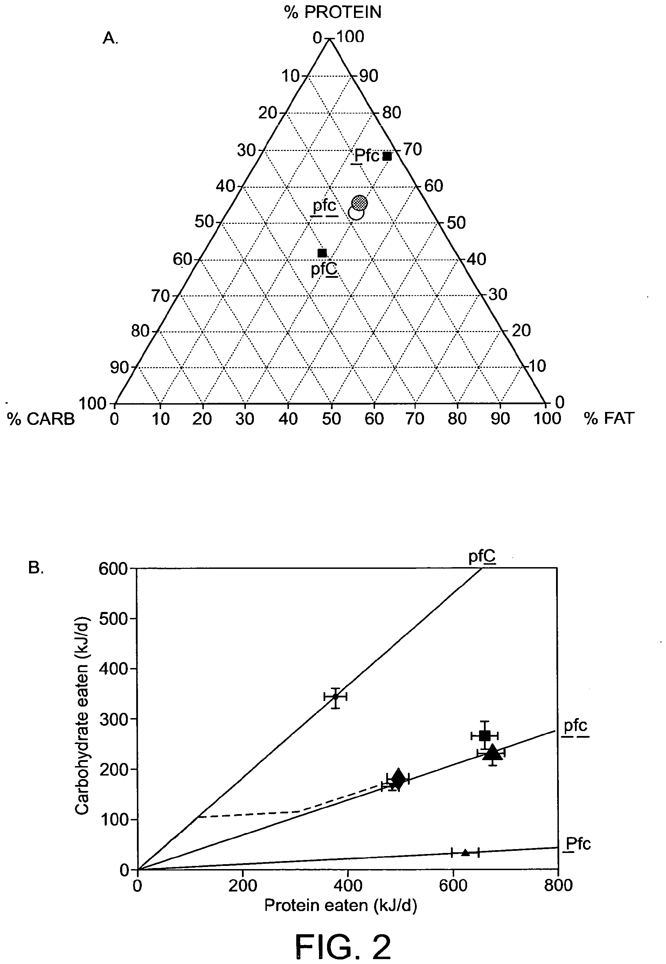

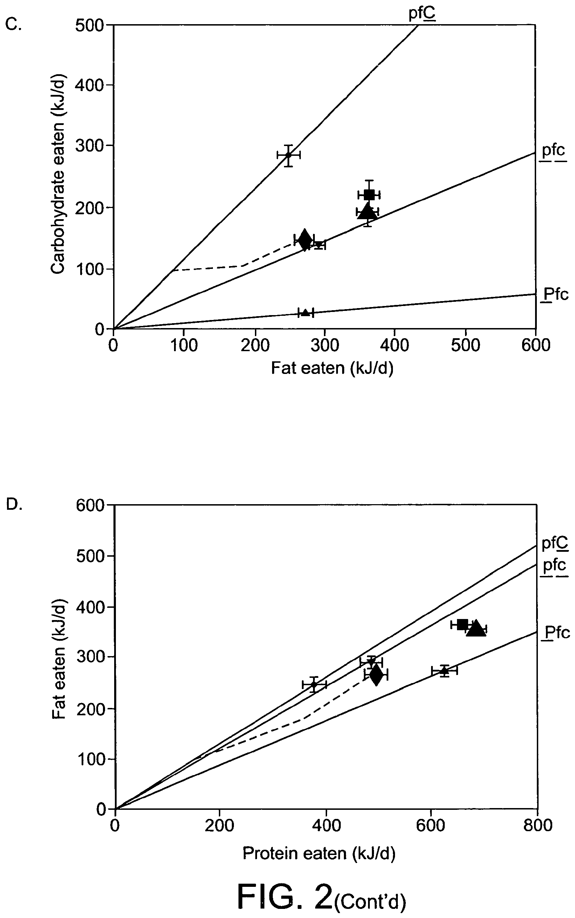

As in Experiment 1, the nutrient intake plots (Fig 2B - D) show that the balance of nutrients selected by the sequential and experienced self-selecting groups was similar, but the sequential self-selectors had overall lower food, nutrient and energy intake than both groups of simultaneous self-selectors (Tables 4 and 5).

**Table 4. Mean daily intake (g) of each diet for each phase of study 2.**

| | Phase 1 Naïve self-selection (3 diets offered) | Phase 2 Learning/Monadic (one diet offered) | Phase 3 Experienced self-selection (3 diets offered) |
|---|---|---|---|
| pfC | 162.2 | 295.3 | 133.3 |
| Pfc | 130.9 | 289.0 | 149.6 |
| pfc | 106.1 | 295.3 | 110.8 |
| Total (g/day) | 399.2 | - | 393.7 |

**Table 5. Mean daily intake (g) of macronutrient for each phase of study 2.**

| | Phase 1 Naïve self-selection | Phase 2 Learning/Monadic | | | Phase 3 Experienced self-selection |
|---|---|---|---|---|---|
| | | pfC | Pfc | pfc | |
| Protein (g/day) | 40.6 | 23.0 | 38.3 | 29.6 | 41.3 |
| Fat (g/day) | 11.3 | 7.7 | 8.4 | 9.0 | 11.2 |
| CHO (g/day) | 17.5 | 22.7 | 2.1 | 11,0 | 15.3 |
| Total Energy (kcal/day) | 297.9 | 217.1 | 220.4 | 217.7 | 293.2 |
| Total Energy (kcal/kg bwt) | 60.2 | 43.0 | 44.3 | 43.5 | 59.5 |

### Study 3. Fixed carbohydrate

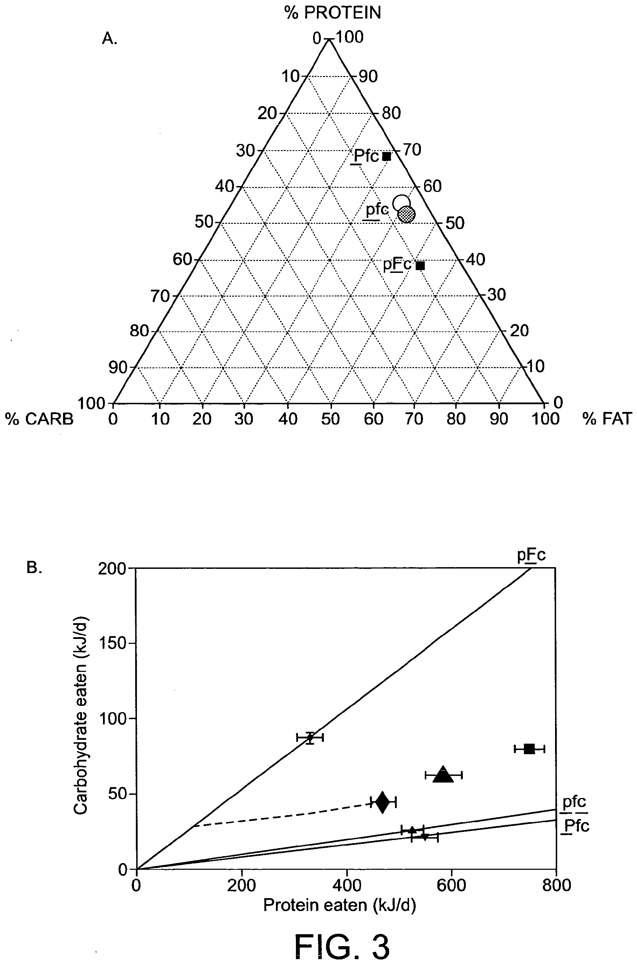

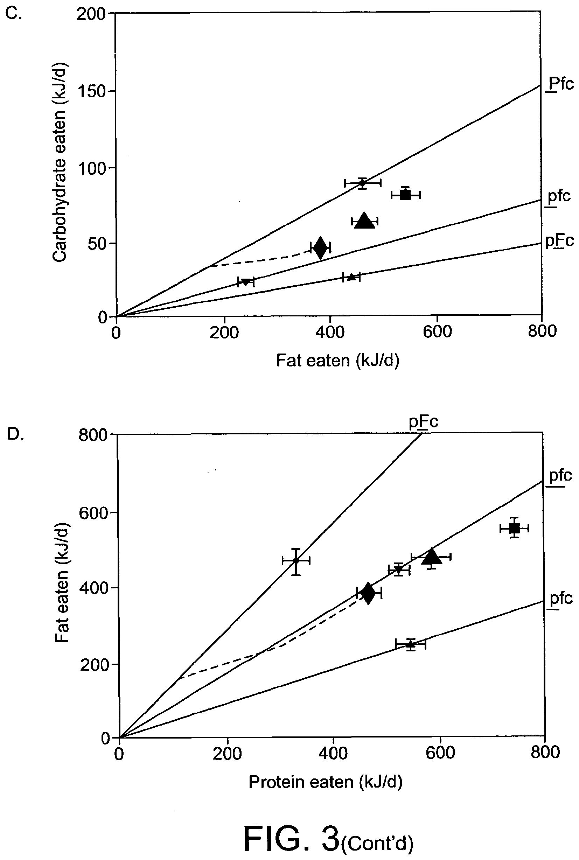

As in Experiments 1 and 2, the nutrient intake plots (Fig 3B-D) indicate that the balance of nutrients selected by the sequential and experienced self-selecting groups was similar and the sequential self-selectors had overall lower food, nutrient and energy intake than both groups of simultaneous self-selectors (Tables 6 and 7).

**Table 6. Mean daily intake (g) of each diet for each phase of study 3**

| | Phase 1 Naïve self-selection (3 diets offered) | Phase 2 Learning/Monadic (one diet offered) | Phase 3 Experienced self-selection (3 diets offered) |
|---|---|---|---|
| Pfc | 156.1 | 254.3 | 103.6 |
| pFc | 67.5 | 221.6 | 76.8 |
| pfc | 172.4 | 295.5 | 139.7 |
| Total (g/day) | 396 | - | 320.1 |

**Table 7. Mean daily intake (g) of macronutrient for each phase of study 3**

| | Phase 1 Naïve self-selection | Phase 2 Learning/Monadic | | | Phase 3 Experienced self-selection |
|---|---|---|---|---|---|
| | | Pfc | pFc | pfc | |
| Protein (g/day) | 45.7 | 33.7 | 20,4 | 32.3 | 36.1 |
| Fat (g/day) | 16.9 | 7.4 | 14.3 | 13.6 | 14.4 |
| CHO (g/day) | 6.4 | 1.8 | 7.0 | 2.0 | 5.0 |
| Total Energy (kcal/day) | 327.6 | 193.8 | 210.7 | 236.7 | 266.7 |
| Total Energy (kcal/kg bwt) | 63.7 | 38.9 | 41.4 | 47.0 | 56.0 |

### Study 4. Variable protein, carbohydrate and fat

As in Experiments 1, 2 and 3 the overall food, nutrient and energy intake was lower in cats during the sequential self-selection phase than both simultaneous self-selection phases (Tables 8 and 9),

**Table 8. Mean daily intake (g) of each diet for each phase of study 4**

| | Phase 1 Naïve self-selection (3 diets offered) | Phase 2 Learning/Monadic (one diet offered) | Phase 3 Experienced self-selection (3 diets offered) |
|---|---|---|---|
| pfC | 210.8 | 296.1 | 208 |
| Pfc | 55.5 | 224.3 | 76.1 |
| pFc | 60.4 | 198.0 | 100.8 |
| Total (g/day) | 326,8 | - | 384.9 |

**Table 9. Mean daily intake (g) of macronutrient for each phase of study 4.**

| | Phase 1 Naïve self-selection | Phase 2 Learning/Monadic | | | Phase 3 Experienced self-selection |
|---|---|---|---|---|---|
| | | pfC | Pfc | pFc | |
| Protein (g/day) | 30.2 | 24.9 | 25.5 | 20.0 | 36.3 |
| Fat (g/day) | 10.3 | 6.8 | 4.8 | 15.3 | 13.5 |
| CHO (g/day) | 18.3 | 22.8 | 1.2 | 6.3 | 19.3 |
| Total Energy (kcal/day) | 252 | 217,9 | 139.7 | 214.1 | 303 |

### Effect on Bodyweight.

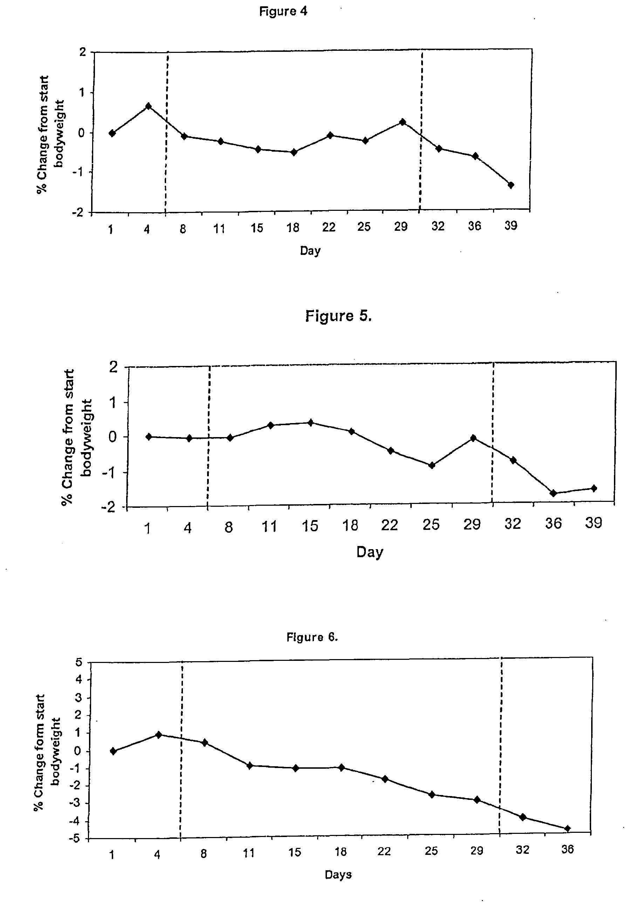

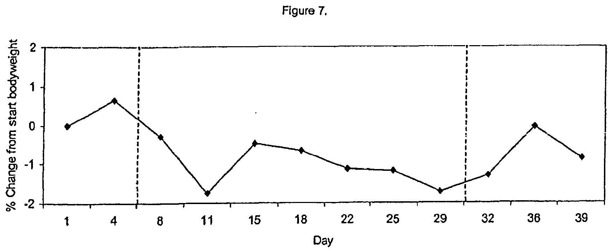

During the monadic sequential self-selection phase (different diet offered each day) for each study cats either maintained a stable bodyweight or a slight decrease was observed (Figures 4-7).

### Example 2: Selection studies with two diet choices

### Animals

Thirty six adult cats (aged 2.1 - 8 years) and weighing 5.61 ± 0.2kg were allocated to one of 3 studies (i.e. 12 cats per study). The cats were housed and fed individually and were socialised in groups during the 2h period when no food was available to them each day. All cats had previously been maintained on wet diets prior to the start of the study.

### Diets

Details of the diets used in these studies are shown in Table 10. During the studies, pairs of diets (wet, chunks in jelly (CIJ) format) were fed to the cats as follows:
Study 1: Diet A vs Diet C
Study 2: Diet B vs Diet C
Study 3: Diet C vs Diet D

The feeding regimen for each study is described below.

**Table 10. Macronutrient compositions of the diets used in studies 1 - 3.**

| **Diet** | **Proximate analysis (g or kcal/100g)** | | | | **Protein/Fat/CHO Energy Ratios (%)** | | |
|---|---|---|---|---|---|---|---|
| | **Prot (g)** | **Fat (g)** | **CHO (g)** | **PME (kcal)** | **PER** | **FER** | **CER** |
| Diet A (Whiskas CIJ) | 8.8 | 5.1 | 0.6 | 70.4 | 45.5 | 52.1 | 2.4 |
| Diet B (Commercial product (non-Mars) CIJ) | 9.2 | 5.3 | 0.8 | 74.1 | 45.4 | 51.6 | 3.0 |
| Diet C (CIJ) | 10.6 | 4.5 | 0.8 | 73.4 | 52.7 | 44.2 | 3.1 |
| Diet D (CIJ) | 14,0 | 2.1 | 2.4 | 73.0 | 70.0 | 20.8 | 9.2 |

| | | | | | | | |
|---|---|---|---|---|---|---|---|
| Predicted Metabolizable Energy (PME) = (% Protein x 3.9) + (% Fat x 7.7 + (% NFE x 3.0) - 5.0 | | | | | | | |

### Feeding regimen

### Phase 1 - Monadic (diet switching) Phase (10 days)

- Cats had 22-hour *ad libitum* access to a single test diet each day.
- Cats received 190g of diet at 10:30am - 3:00pm, and a fresh 190g of diet at 3:00pm, which remained in the lodge until 08:30am the following morning.
- Each test diet was fed individually over a 2-day cycle. Each cycle was repeated 5 times during this 10-day phase.
- Water was available *ad libitum.*

### Phase 2 -Self-Selection phase (4 days)

- Cats had 22-hour *ad libitum* access to both diets simultaneously.
- Cats received 190g of each diet at 10:30am - 3:00pm, and a fresh 190g of each diet at 3:00pm, which will remain in the lodge until 08:30am the following morning.
- Water was available *ad libitum.*

### Results

In each study food (Tables 11,13 and 15) energy (Tables 12,14 and 16) intake was lower during the monadic phase when cats had two diets offered on alternate days compared to the self-selection phase when the two diets were offered simultaneously.

### Study 1

**Table 11. Mean daily intake (g) of each diet for each phase of study 1.**

| | Phase 1 Monadic (one diet offered) | Phase 2 Self-selection (2 diets offered) |
|---|---|---|
| Diet A (g/day) | 332.2 | 161.2 |
| Diet C (g/day) | 338.4 | 217.2 |
| Total (g/day) | - | 378.4 |

**Table 12. Mean daily intake of energy (kcal and kcal/kg bwt) for each phase of study 1.**

| | Phase 1 Monadic | | Phase 2 Self-selection |
|---|---|---|---|
| | Diet A | Diet C | |
| Total Energy (kcal/day) | 250.5 | 257.9 | 291.8 |
| Total Energy (kcal/kg bwt/day) | 41.5 | 43.9 | 48.1 |

### Study 2

**Table 13. Mean daily intake (g) of each diet for each phase of study 2.**

| | Phase 1 Learning/Monadic (one diet offered) | Phase 2 Self-selection (2 diets offered) |
|---|---|---|
| Diet B (g/day) | 348.6 | 276.6 |
| Diet C (g/day) | 335.1 | 153.8 |
| Total (g/day) | - | 430.4 |

**Table 14. Mean daily intake of energy (kcal and kcal/kg bwt) for each phase of study 2.**

| | Phase 1 Monadic | | Phase 2 Self-selection |
|---|---|---|---|
| | Diet B | Diet C | |
| Total Energy (kcal/day) | 275.7 | 262.7 | 339.3 |
| Total Energy (kcal/kg bwt/day) | 54.2 | 51.3 | 64.9 |

### Study 3

**Table 15. Mean daily intake (g) of each diet for each phase of study 3.**

| | Phase 1 Monadic (one diet offered) | Phase 2 Self-selection (2 diets offered) |
|---|---|---|
| Diet D (g/day) | 325.4 | 202.1 |
| Diet C (g/day) | 349.1 | 227.3 |
| Total (g/day) | - | 429.4 |

**Table 16. Mean daily intake of energy (kcal and kcal/kg bwt) for each phase of study 3.**

| | Phase 1 Learning/Monadic | | Phase 2 Self-selection |
|---|---|---|---|
| | Diet D | Diet C | |
| Total Energy (kcal/day) | 253.7 | 273.6 | 335.7 |
| Total Energy (kcal/kg bwt/day) | 45.6 | 48.8 | 59.6 |

## Claims

1. The non-therapeutical use of a nutritionally complete pet food product comprising at least two compositions for a companion animal, wherein the compositions differ in their level of fat, protein or carbohydrate on an energy ratio basis by 6% to 50%, and wherein the compositions are consumed on consecutive days, each composition being consumed on altemate days for reducing calorie intake in a companion animal.

2. The use of the nutritionally complete pet food product according to claim 1, wherein the pet food product comprises three compositions, wherein the compositions are consumed on three consecutive days, each composition being consumed on altemate days.

3. The use of the nutritionally complete pet food product according to claim 1 or claim 2, wherein the companion animal is a low-activity animal and the food product is fed on a long term or permanent basis.

4. The use of a nutritionally complete pet food product according to any one of claims 1 to 3, wherein the pet food product is fed to a companion animal for up to six months.

5. The use of a nutritionally complete pet food product according to claim 2, wherein each of the three compositions differ in their level of fat, protein or carbohydrate.

6. The use of a nutritionally complete pet food product according to any one of claims 1 to 5, wherein the difference in fat, protein or carbohydrate content between the compositions is from 10% to 40% on an energy ratio basis.

7. The use of a nutritionally complete pet food product for use according to any one of claims 1 to 6, wherein the animal is a feline animal.

8. The use of a nutritionally complete pet food product for use according to any one of claims 1 to 7, wherein the food product is used in conjunction with one or more additional calorie intake reducing method.

9. The use of a nutritionally complete pet food product according to claim 8, wherein the food product includes adding a bulking agent to one or more of the compositions.

10. The non-therapeutical use of a package containing at least two compositions in a method of reducing calorie intake in a companion animal, wherein the compositions differ in their level of fat on an energy ratio basis by 6% to 50%, and wherein the compositions are consumed on consecutive days, each composition being consumed on altemate days.

11. A pet food product according to any one of claims 1 to 5 and 6 to 9 or a package according to claim 10, for use in a weight loss regime for overweight animals, wherein the compositions of the pet food product or the package are consumed on consecutive days, each composition being consumed on alternate days.

12. A nutritionally complete pet food product according to any one of claims 1 to 5, for use in a method for preventing weight gain after a surgical procedure for neutering the companion animal, wherein the compositions of the nutritionally complete pet food product are consumed on consecutive days, each composition being consumed on alternate days.

## Patentansprüche

1. Nicht-therapeutische Verwendung eines ernährungsphysiologisch vollständigen Haustiernahrungsprodukts, umfassend mindestens zwei Zusammensetzungen, für ein Heimtier, wobei die Zusammensetzungen sich in ihrem Niveau an Fett, Protein oder Kohlenhydrat auf Basis des Energieverhältnisses um 6 % bis 50 % unterscheiden, und wobei die Zusammensetzungen an aufeinander folgenden Tagen konsumiert werden, wobei jede Zusammensetzung an alternierenden Tagen wechselweise konsumiert wird, um die Kalorienaufnahme bei einem Heimtier zu reduzieren.

2. Verwendung des ernährungsphysiologisch vollständigen Haustiernahrungsprodukts nach Anspruch 1, wobei das Haustiernahrungsprodukt drei Zusammensetzungen umfasst, wobei die Zusammensetzungen an drei aufeinander folgenden Tagen konsumiert werden, wobei jede Zusammensetzung an alternierenden Tagen wechselweise konsumiert wird.

3. Verwendung des ernährungsphysiologisch vollständigen Haustiernahrungsprodukts nach Anspruch 1 oder Anspruch 2, wobei das Heimtier ein Tier mit geringer Aktivität ist und das Nahrungsprodukt auf langfristiger oder dauerhafter Basis gefüttert wird.

4. Verwendung eines ernährungsphysiologisch vollständigen Haustiernahrungsprodukts nach einem der Ansprüche 1 bis 3, wobei das Haustiernahrungsprodukt einem Heimtier bis zu sechs Monate gefüttert wird.

5. Verwendung eines ernährungsphysiologisch vollständigen Haustiernahrungsprodukts nach Anspruch 2, wobei jede der drei Zusammensetzungen sich in ihrem Niveau an Fett, Protein oder Kohlenhydrat unterscheidet.

6. Verwendung eines ernährungsphysiologisch vollständigen Haustiernahrungsprodukts nach einem der Ansprüche 1 bis 5, wobei der Unterschied im Fett-, Protein- oder Kohlenhydratgehalt zwischen den Zusammensetzungen 10 % bis 40 % basierend auf einem Energieverhältnis beträgt.

7. Verwendung eines ernährungsphysiologisch vollständigen Haustiernahrungsprodukts zur Verwendung nach einem der Ansprüche 1 bis 6, wobei das Tier ein katzenartiges Tier ist.

8. Verwendung eines ernährungsphysiologisch vollständigen Haustiernahrungsprodukts zur Verwendung nach einem der Ansprüche 1 bis 7, wobei das Nahrungsprodukt zusammen mit einem oder mehreren weiteren Verfahren zum Reduzieren der Kalorienaufnahme verwendet wird.

9. Verwendung eines ernährungsphysiologisch vollständigen Haustiernahrungsprodukts nach Anspruch 8, wobei das Nahrungsprodukt Hinzufügen eines Füllstoffs zu einer oder mehreren der Zusammensetzungen einschließt.

10. Nicht-therapeutische Verwendung einer Packung, die mindestens zwei Zusammensetzungen enthält, in einem Verfahren zum Reduzieren der Kalorienaufnahme bei einem Heimtier, wobei die Zusammensetzungen sich in ihrem Fettniveau auf Basis des Energieverhältnisses um 6 % bis 50 % unterscheiden, und wobei die Zusammensetzungen an aufeinander folgenden Tagen konsumiert werden, wobei jede Zusammensetzung an alternierenden Tagen wechselweise konsumiert wird.

11. Haustiernahrungsprodukt nach einem der Ansprüche 1 bis 5 und 6 bis 9 oder eine Packung nach Anspruch 10 in einem Gewichtsabnahmeschema für übergewichtige Tiere, wobei die Zusammensetzungen des Haustiernahrungsprodukts oder der Packung an aufeinander folgenden Tagen konsumiert werden, wobei jede Zusammensetzung an alternierenden Tagen wechselweise konsumiert wird.

12. Ernährungsphysiologisch vollständiges Haustiernahrungsprodukt nach einem der Ansprüche 1 bis 5 zur Verwendung in einem Verfahren zur Prävention der Gewichtszunahme nach einem chirurgischen Eingriff zum Sterilisieren des Heimtiers, wobei die Zusammensetzungen des ernährungsphysiologisch vollständigen Haustiernahrungsprodukts an aufeinander folgenden Tagen konsumiert werden, wobei jede Zusammensetzung an alternierenden Tagen wechselweise konsumiert wird.

## Revendications

1. Utilisation non thérapeutique d'un produit alimentaire complet sur le plan nutritionnel pour animal domestique comprenant au moins deux compositions pour un animal de compagnie, les compositions différant dans leur niveau de graisses, de protéines ou de glucides, sur une base de rapport énergétique, de 6 % à 50 %, et les compositions étant consommées sur plusieurs jours consécutifs, chaque composition étant consommée en jours alternés pour une réduction de l'apport calorique chez un animal de compagnie.

2. Utilisation du produit alimentaire complet sur le plan nutritionnel pour animal domestique selon la revendication 1, le produit pour animal domestique comprenant trois compositions, les compositions étant consommées un jour sur trois, chaque composition étant consommée en jours alternés.

3. Utilisation du produit alimentaire complet sur le plan nutritionnel pour animal domestique selon la revendication 1 ou la revendication 2, l'animal de compagnie étant un animal à faible activité et le produit alimentaire étant alimenté à long terme ou de façon permanente.

4. Utilisation d'un produit alimentaire complet sur le plan nutritionnel pour animal domestique selon l'une quelconque des revendications 1 à 3, le produit alimentaire pour animal domestique étant alimenté à un animal de compagnie pendant jusqu'à 6 mois.

5. Utilisation d'un produit alimentaire complet sur le plan nutritionnel pour animal domestique selon la revendication 2, chacune des trois compositions différant dans leur niveau de graisses, de protéines ou de glucides.

6. Utilisation d'un produit alimentaire complet sur le plan nutritionnel pour animal domestique selon l'une quelconque des revendications 1 à 5, la différence en teneur en graisses, en protéines ou en glucides entre les compositions étant de 10 % à 40 % sur une base de rapport énergétique.

7. Utilisation d'un produit alimentaire complet sur le plan nutritionnel pour animal domestique selon l'une quelconque des revendications 1 à 6, l'animal étant un félin.

8. Utilisation d'un produit alimentaire complet sur le plan nutritionnel pour animal domestique selon l'une quelconque des revendications 1 à 7, le produit alimentaire étant utilisé en conjonction avec un ou plusieurs procédés de réduction d'apport calorique supplémentaires.

9. Utilisation d'un produit alimentaire complet sur le plan nutritionnel pour animal domestique selon la revendication 8, le produit alimentaire comprenant l'ajout d'un agent de gonflement à une ou plusieurs des compositions.

10. Utilisation non thérapeutique d'un ensemble contenant au moins deux compositions dans un procédé de réduction d'apport calorique chez un animal de compagnie, les compositions différant dans leur niveau de graisses, sur une base de rapport énergétique, de 6 % à 50 %, et les compositions étant consommées sur plusieurs jours consécutifs, chaque composition étant consommée en jours alternés.

11. Produit alimentaire pour animal domestique selon l'une quelconque des revendications 1 à 5 et 6 à 9 ou ensemble selon la revendication 10, pour une utilisation dans un régime de perte de poids pour des animaux en surpoids, les compositions du produit alimentaire pour animal domestique ou l'emballage étant consommé(es) sur plusieurs jours consécutifs, chaque composition étant consommée en jours alternés.

12. Produit alimentaire complet sur le plan nutritionnel pour animal domestique selon l'une quelconque des revendications 1 à 5, pour une utilisation dans un procédé pour la prévention d'un gain de poids après une intervention chirurgicale pour la stérilisation de l'animal de compagnie, les compositions du produit alimentaire complet sur le plan nutritionnel pour animal domestique étant consommées sur plusieurs jours consécutifs, chaque composition étant consommée en jours alternés.
